(19) Europäisches Patentamt
European Patent Office
Office européen des brevets

(11) EP 3 106 863 A1

(12) **EUROPEAN PATENT APPLICATION**

(43) Date of publication:
21.12.2016 Bulletin 2016/51

(51) Int Cl.:
*G01N 23/04* (2006.01)

(21) Application number: 15173032.2

(22) Date of filing: 19.06.2015

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA

(71) Applicants:
• Universiteit Gent
9000 Gent (BE)
• Katholieke Universiteit Leuven
3000 Leuven (BE)
• Universiteit Antwerpen
2000 Antwerpen (BE)

(72) Inventors:
• DE SCHRYVER, Thomas
9030 Mariakerke (BE)

• DIERICK, Manuel
9810 Eke-Nazareth (BE)
• VAN HOOREBEKE, Luc
9000 Gent (BE)
• NICOLAÏ, Bart
3550 Heusden-Zolder (BE)
• VERBOVEN, Pieter
3020 Herent (BE)
• VAN DAEL, Mattias
1000 Brussel (BE)
• SIJBERS, Jan
2570 Duffel (BE)

(74) Representative: DenK iP
Leuvensesteenweg 203
3190 Boortmeerbeek (BE)

(54) **TOMOGRAPHY FOR IN-LINE PRODUCT INSPECTION**

(57)     A tomographic imaging device (1) for in-line product inspection is described. The device comprises a stationary radiation source (2) for emitting radiation, a stationary image detector (3) for capturing a plurality of projection images of a product item (4) by detecting the radiation transmitted through the product (4), and a tomographic reconstruction unit (6) for determining an internal representation of the product. The device further comprises a transport line (5) for moving the item (4) along a predetermined path in between the source (2) and the detector (3) by simultaneously rotating and translating the product item (4), such as to orient and position the product item in different orientations and positions with respect to the detector (3) when each of the plurality of projection images is captured, said rotating occurring around a rotation axis that is not parallel with the translation axis of said translating.

FIG 1

EP 3 106 863 A1

**Description**

**Field of the invention**

The invention relates to the field of non-destructive testing of products. More specifically it relates to a tomographic imaging device and tomographic imaging method for in-line product inspection.

**Background of the invention**

X-ray imaging has become a valuable tool in many industrial branches to perform non-destructive tests for ensuring the quality of a product. Since most materials are translucent to X-rays, internal defects can be visualized without cutting open and damaging the product. For example, the use of two-dimensional X-ray radiographic imaging for non-destructively testing the quality of products and/or detecting defects in products is known in the art, e.g. for in-line inspection of food products in the food industry. Such a simple 2D radiographic projection, in which all features on the inside and the outside of the object are superimposed into one single image, may provide a fast way to visualize the interior of an object in-line.

However, some internal defects cannot be discerned on projection images captured from a single point of view, or even by simultaneously evaluating a plurality of images corresponding to a plurality of complementary projection views, e.g. images corresponding to two or more projection views along mutually orthogonal projection axes. However, several 2D radiographs, taken from multiple directions, can be combined to reconstruct a full three-dimensional (3D) visualization of an object's interior, a technique called computed tomography (CT). Thus, particular applications, in which 2D radiographic product inspection does not suffice, for example in food inspection, may benefit from tomographic imaging techniques that provide a full computed tomography (CT) visualization of the internal structure of the imaged object. However, the complexity of 3D CT imaging techniques as known in the art can have the disadvantage of compromising the desired production line throughput, while providing a sufficient image quality to ensure defect detectability.

For example, a trade-off exists in CT imaging between the signal to noise ratio (SNR) and the acquisition speed, which may be one of the reasons why 3D X-Ray CT is not yet commonly used as an inspection tool in food industry. Furthermore, the image reconstruction and the image analysis stages which complete the imaging chain can be complex and computationally demanding in CT. Even though CT can prove to be a successful non-destructive inspection tool, the imaging process should not compromise the desired production throughput, while simultaneously preserving sufficient image quality to ensure defect detectability. Therefore, the image acquisition should be as fast as possible, e.g. using a low X-ray detector exposure time and/or only few projections to reconstruct the interior of the scanned object, while reaching the limit of an acceptable signal to noise ratio (SNR).

In the food industry, some defects, such as browning disorders in fruit, inherently show low contrast with respect to their surroundings and can be very small. The trade-off between a high acquisition speed and a high contrast and resolution image, is one of the main reasons why 3D X-Ray CT has not yet touched ground as an inspection tool in food industry. However, in other industrial branches, it is known in the art to use CT in-line or at-line, for example as a metrology tool, using high throughput batch delivery systems or a continuous throughput conveyor belt system using a helical scanning approach.

For example, it is known in the art to automatically place discrete product samples from a larger batch on a scanning stage to be scanned one by one, e.g. such as in commercially available North Star Imaging In-line Computed Tomography Systems. Such batch scanning systems may be considered to provide an 'at-line' imaging system, rather than an in-line system. While this may guarantee a satisfactory throughput of the line from which the samples are selected, this approach has the disadvantage that not every product article is inspected for defects, only the selected samples, such that only a statistically inferred detection of defects can be achieved.

Furthermore, in the commercially available General Electric (GE) Speed Scan CT system, an X-ray source and an X-ray detector are mounted on a gantry such as to allow a continuous rotation of the imaging system around a product to be inspected while it is transported through the gantry opening along a straight path by a conveyor belt. However, such system requires a carefully balanced, fast rotating gantry assembly, and may therefore have a high cost associated therewith, e.g. a high cost of manufacture, operation and/or maintenance.

**Summary of the invention**

It is an object of embodiments of the present invention to provide 3D tomographic images of a product in a flow of products conveyed along a line.

It is an advantage of embodiments of the present invention that in-line computed tomography defect inspection can be achieved, without limiting or with only relative limitation on the speed of transportation of the products.

It is an advantage of embodiments of the present invention that a system according to embodiments can be readily inserted into a continuous throughput conveyor belt production chain. It is an advantage of embodiments of the present invention that a method according to embodiments can be readily applied to a continuous throughput conveyor belt production chain.

It is an advantage of embodiments of the present invention that a system according to embodiments does not require a carefully balanced, fast rotating gantry assembly.

It is an advantage of embodiments of the present invention that the line throughput of a product line on which a system or a method according to embodiments is applied can be easily scaled, e.g. by selecting an appropriate size of the detector.

The above objective is accomplished by a method and device according to the present invention.

The present invention relates to a tomographic imaging device for in-line product inspection, the tomographic imaging device comprising a stationary radiation source for emitting radiation, a stationary image detector for capturing a plurality of projection images of a product item by detecting said radiation when transmitted through said product item, a transport line for moving said product item along a predetermined path in between said radiation source and said image detector, and a tomographic reconstruction unit for determining an internal representation of the product item based on the plurality of projection images,

wherein said transport line is adapted for simultaneously rotating and translating along the transport line said product item such as to orient and position the product item in a different orientation and at a different position with respect to the image detector when each of the plurality of projection images is captured, said rotating occurring around a rotation axis that is not parallel with the translation axis of said translating. The angle between the rotation axis and the translation axis may be at least 5°. The angle between the rotation axis and the translation axis may be in sime embodiments 90°.

It is an advantage of embodiments of the present invention that real in-line CT scanning can be performed at sufficiently high speed to allow processing products substantially at their conventional speed.

The stationary source may be adapted for emitting said radiation in a predetermined cone angle around a central beam axis direction, said central beam axis direction being directed to a central radiation-sensitive pixel element of the image detector. It is an advantage of embodiments of the present invention that the source and detector can be positioned stationary, resulting in a less complex setup, which is more easily implementable. The predetermined cone angle may be predetermined by the width of the image detector.

The stationary source may be an ionizing radiation source for emitting ionizing radiation. In some embodiments of the present invention, the ionizing radiation source comprises an end-window X-ray tube or a side-window X-ray tube.

The predetermined cone angle ($\alpha$) of the emission beam may relate to the minimum rotation angle ($\theta$) and the diameter ($D_{ROI}$) of the product item during its transition through the field of view of the emission beam at a predetermined distance (ODD) from an image detector of a predetermined width (L) as follows :

$$SDD = \frac{L}{2\tan(\alpha)}$$

$$SOD = SDD - ODD$$

$$\frac{\pi/2 - \alpha}{\theta} = \frac{\sin(\theta)}{\cos(\alpha)} \cdot \frac{2\,SOD\,\sin(\alpha) - D_{ROI}}{2\,SOD\,\cos(\theta) + D_{ROI}}$$

The stationary image detector may comprise a flat-panel digital X-ray image detector. The transport line may be adapted for moving a stream of product items comprising said product item (4) along said predetermined path.

The transport line may comprise any of a conveyor belt, a fluid stream portion or a free fall portion, said stationary source and image detector being positioned around said conveyor belt, fluid stream portion or free fall portion.

Said conveyor belt may comprise a curved conveyor belt adapted for simultaneously translating and rotating said product item.

The conveyor belt may be adapted for translating the product item along a substantially rectilinear path. The transport line further may comprise a rotation stage for rotating the product item while being translated along the substantially rectilinear path.

The conveyor belt may be arranged such as to orient the substantially rectilinear path substantially parallel to a detection plane of the image detector.

The rotation stage may be adapted for rotating the product item at a constant angular velocity. The angular velocity may in some embodiments be non-constant. An axis of rotation of said rotation stage may be substantially parallel to said substantially rectilinear path.

An axis of rotation of said rotation stage may be substantially perpendicular to the substantially rectilinear path, and said axis of rotation forms an angle with the gravitational vertical direction of less than 20°.

In another aspect, the present invention also relates to a tomographic imaging method for in-line product inspection, the tomographic imaging method comprising moving a product item along a predetermined path in between a stationary radiation source and a stationary image detector,

capturing a plurality of projection images of the product item using the stationary image detector by detecting radiation emitted by the stationary radiation source and transmitted through said product item, and

determining an internal representation of the product item based on the plurality of projection images,

wherein said moving of the product item comprises simultaneously rotating and translating said product item such as to orient and position the product item in a different orientation and at a different position with respect to the image detector when each of the plurality of projection images is captured. Said rotating and translating may occur around a rotation axis respectively along a translating axis, whereby the rotation axis and the translation axis are not parallel. The angle between the rotation axis and the translation axis may be at least 5°. The angle between the rotation axis and the translation axis may in some embodiments be 90°.

In one aspect, the present invention also relates to the use of a tomographic imaging device as described above for the in-line inspection of defects in food articles. It is an advantage of embodiments of the present invention that a good, fast and accurate in-line inspection system for detecting defects in food articles, such as for example fruits is provided.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.


**Brief description of the drawings**

FIG 1 shows a tomographic imaging device according to embodiments of the present invention.

FIG 2 illustrates a rectilinear translation configuration of an imaging device in accordance with embodiments of the present invention.

FIG 3 illustrates a first geometrical requirement for an exemplary configuration of an imaging device to be Tuy-Smith compliant, in accordance with embodiments of the present invention.

FIG 4 illustrates a second geometrical requirement for an exemplary configuration of an imaging device to be Tuy-Smith compliant, in accordance with embodiments of the present invention.

FIG 5 shows an exemplary trajectory of two points on the product item when imaged by a device having a straight conveyor belt geometry with rotation stages in accordance with embodiments of the present invention.

FIG 6 shows the covered angular range for two points on the product item when imaged by a device having a straight conveyor belt geometry with rotation stages in accordance with embodiments of the present invention.

FIG 7 shows a photograph of a prototype device that can be used in testing and designing embodiments of the present invention.

FIG 8 shows a digital food phantom used for simulations in an example relating to embodiments of the present invention.

FIG 9 shows plots of throughput versus detectable feature size in an example relating to embodiments of the present invention.

The drawings are only schematic and are non-limiting. In the drawings, the size of some of the elements may be exaggerated and not drawn on scale for illustrative purposes.

Any reference signs in the claims shall not be construed as limiting the scope.

In the different drawings, the same reference signs refer to the same or analogous elements.


**Detailed description of illustrative embodiments**

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Where in embodiments of the present invention reference is made to for "in-line" product inspection, reference is made to production inspection that can readily be incorporated as part of a production chain, and that can inspect all of the products passed through the inspection device on a per-product basis, without halting or substantially slowing down the production chain's throughput. In-line may for example be used for referring to inspection of an object that is being moved by a conveyer system as part of a continuous process.

In the description provided herein, numerous specific details are set forth. However, it is understood that embodiments of the invention may be practiced without these specific details. In other instances, well-known methods, structures and techniques have not been shown in detail in order not to obscure an understanding of this description.

In a first aspect, the present invention relates to a tomographic imaging device, e.g. an X-ray tomography imaging device, for in-line product inspection. The tomographic imaging device comprises a stationary radiation source for emitting radiation, e.g. a stationary X-ray source for emitting X-ray radiation, and a stationary image detector, e.g. a digital X-ray image detector, for capturing a plurality of projection images of a product item by detecting the radiation when transmitted through the product item. The tomographic imaging device further comprises a transport line for moving the product item along a predetermined path in between the radiation source and the image detector. This transport line is adapted for simultaneously rotating and translating the product item such as to orient and position the product item in a different orientation and at a different position with respect to the image detector when each of the plurality of projection images is captured. Rotating typically occurs around a rotation axis that is not parallel with the translation axis of the translating. The angle between the rotation axis and the translation axis may be at least 5°, may for example be 90°. For example, the transport line may be adapted for simultaneously rotating and translating the product item, such as to orient the product item in a different orientation with respect to the image detector when each of the plurality of projection images is captured, and such as to position the product item at a different position along the transport line when each of the plurality of projection images is captured. The tomographic imaging device further comprises a tomographic reconstruction unit for determining an internal representation of the product item based on the plurality of projection images.

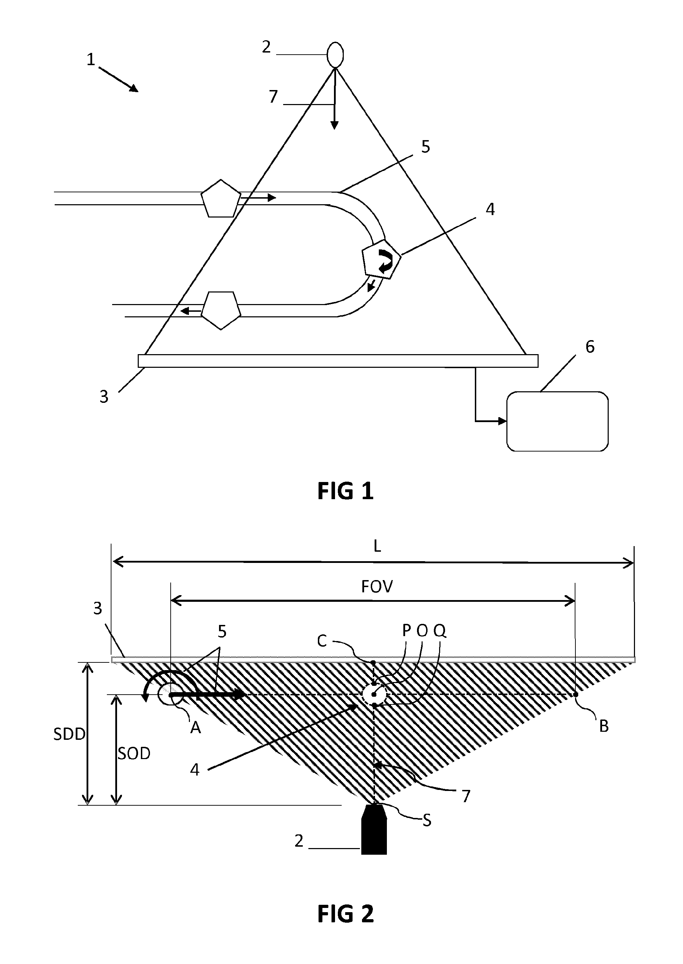

FIG 1 shows an exemplary tomographic imaging device 1 for in-line product inspection according to embodiments of the present invention. This tomographic imaging device 1 comprises a stationary radiation source 2 for emitting radiation and a stationary image detector 3.

The source and the detector may be arranged in a stationary manner, such that, in operation, their position and orientation remain substantially constant, e.g. with respect to a fixed floor, wall or ceiling in a production facility. Furthermore, the source 2 and the detector 3 may be arranged at a fixed and predetermined distance with respect to each other, further referred to as the source-detector distance (SDD). In particular, embodiments of the present invention may relate to a tomographic imaging device 1 in which neither the stationary radiation source 2 nor the stationary image detector 3 are mounted on a rotatable gantry.

The source may emit the radiation in the direction of a central point of the radiation-sensitive area of the image detector, e.g. may emit radiation in a mean direction, e.g. a central beam axis direction 7, corresponding to a mathematical line connecting the source focus to a central detector pixel location C. Thus, the stationary source may be adapted for emitting the radiation in a predetermined cone angle around a central beam axis direction 7 directed from the source 2, e.g. from a source focus point S of the source 2, to a central radiation-sensitive pixel element of the image detector.

The source 2 may emit radiation in a predetermined cone angle such as to cover, preferably, substantially the entire radiation-sensitive area of the image detector 3. The source 2 may also provide a high radiation flux such as to obtain a good signal to noise ratio.

The source 2 may comprise an ionizing radiation source, for example a radioactive source, e.g. a gamma emitter, or an X-ray tube. The X-ray source may for example emit photons having energies in the range of 100 eV to 400 keV, e.g. in the range of 1 keV to 200 keV, for example in the range of 10 keV to 100 keV. However embodiments of the present invention may also relate to other types of radiation, e.g. particularly to types of radiation which can be transmitted through the object to be tested along a substantially linear trajectory, e.g. without significant reflection, refraction or diffraction of the radiation wave, while the absorption of the radiation in the object to be tested is neither very high nor very low, such that an acceptable contrast range can be achieved in the tomographic reconstruction. It is to be noted that the skilled person is well-aware of suitable radiation types, as known in the art, for tomographic imaging of a specific object given its material properties and spatial dimensions, and has knowledge of corresponding sources and image detectors known in the art for such radiation type, which may thus be used as the stationary radiation source 2 and the stationary image detector 3 in accordance with embodiments of the present invention.

The source 2 may for example comprise an X-ray tube, e.g. a Coolidge tube, or a functionally similar tube assembly for generating X-rays. This X-ray tube may comprise a cathode filament and an anode element. The cathode filament may be adapted for thermionic emission due to heating by a cathode current applied to the filament, e.g. the cathode filament may for example comprise a suitable material for thermionic emission such as tungsten. The tube may be adapted for applying a high voltage potential between the cathode and the anode, e.g. a voltage in the range of 1 kV to 600 kV, e.g. in the range of 5 kV to 200 kV, e.g. in the range of 10 kV to 150 kV, e.g. in the range of 20 kV to 100 kV, e.g. in the range of 30 kV to 80 kV. The tube may be an end-window tube, further referred to as transmission type of tube, or may be a side-window tube, further referred to a directional type of tube. For example, in an end-window tube, the anode may comprise a thin target for emitting X-rays in substantially the same direction as the accelerated electrons hitting the target.

The source may comprise a transmission type X-ray tube, such that, advantageously, a large cone angle can be achieved for covering the detector area. A transmission type X-ray tube may for example have an emission span of up to 180° in theory. However, the source 2 may also comprise a directional, water-cooled X-ray target. It is an advantage of a directional water-cooled X-ray target that a large photon flux may be achieved, and therefore also a favorable SNR may be obtained. The source 2 may also comprise a matching collimator, e.g. may comprise a directional water-cooled X-ray target and an X-ray collimator specifically tuned to this directional water-cooled X-ray target. While directional X-ray targets may have a limited beam-opening angle, an opening angle of 80° may for example be achieved by using a matching collimator.

The stationary image detector 3 is adapted for capturing a plurality of projection images of a product item 4 by detecting the radiation when transmitted through the product item 4. The image detector 3 may be adapted for capturing, e.g. acquiring or detecting, the plurality of projection images at different moments in time, e.g. acquiring the plurality of projection images non-simultaneously and/or in time frames corresponding to mutually disjunctive time frames of exposure. The stationary image detector also may be a multiple of detectors put parallel and in series. Such detectors may e.g. be positioned under different relative angles. In this way curvature or another pattern of the detector surface can be obtained.

In some embodiments curvature could be introduced and this may facilitate an equi-angular sampling. The transportation line should then also be curved and the source advantageously should be in the centre of curvature.

Another advantage of a curved surface is that, at large viewing angles, cross talk between the detector pixels can be reduced.

Multiple detectors can be used in series to increase the detector surface. Multiple sources also can be used, e.g. if the viewing angle would be too small.

The tomographic imaging device 1 also comprises a tomographic reconstruction unit 6 for determining an internal representation of the product item 4 based on the plurality of projection images. The stationary image detector 3 may for example be adapted for transducing a spatial distribution of the radiation, emitted by the radiation source, e.g. a spatial distribution where the radiation is impinging on an active detector area of the detector, into a signal that can be processed by the tomographic reconstruction unit 6. The tomographic reconstruction unit 6 may for example comprise hardware and/or software, e.g. a computer or cluster of computers programmed for tomographic reconstruction. The tomographic reconstruction unit 6 may be adapted for enabling internal inspection of the product item 4 and/or for defect detection. The tomographic reconstruction unit may be adapted for reconstructing 2D projections, e.g. radiographic projections, into a 3D image volume. The tomographic reconstruction unit may be configured for applying a fast analytical reconstruction algorithm, e.g. a Feldkamp-David-Kress algorithm for a circular cone beam CT configuration or a Katsevich algorithm for a helical cone beam CT configuration. However, embodiments of the present invention are not limited to circular and/or helical cone beam CT, and particular embodiments of the present invention may use an algebraic reconstruction technique. For example, the tomographic reconstruction unit may be configured for applying an iterative reconstruction scheme, such as a simultaneous algebraic reconstruction technique (SART). Even though such iterative reconstruction techniques may be computationally demanding, they may advantageously offer scalability and flexibility toward reconfiguration of the simultaneous translation and rotation trajectory along which the imaged product items are moved during the imaging sequence. Iterative reconstruction techniques may also outperform other reconstruction techniques when a low number of projections are available. Therefore, in applications where a high throughput is desirable, iterative reconstruction techniques may be advantageous, as they may allow an acceptable reconstruction using fewer projection images. Furthermore, statistical iterative reconstruction (SIR) schemes may be used, which advantageously can handle very low signal to noise ratios.

The tomographic imaging device 1 may also comprise a machine vision unit, for complementing the imaging chain after the CT acquisition and reconstruction. This machine vision unit may for example comprise a computer or cluster of computers programmed for applying machine vision algorithms for the detection of defects in the imaged product item. For example, the 3D volumes provided by the tomographic reconstruction unit may be analyzed to extract information about possible defects. The reconstruction and computer vision analysis may be addressed with suitably scaled computing power and well-developed algorithms, as are available in the state of the art and can be readily applied by the skilled person. However, it is to be noted that a convenient selection of suitable reconstruction algorithms and defect detection algorithms may have an impact on signal-to-noise tolerances in the imaging chain. Therefore, it is a further advantage of embodiments of the present invention that an improvement of quality tolerances in reconstruction and/or detection can be used to increase the throughput of the tomographic imaging device 1 without requiring extensive reconfiguration of the tomographic imaging device 1.

The stationary image detector 3 may comprise a digital image detector, e.g. a pixel array of radiation-sensitive pixels. For example, the stationary image detector 3 may comprise a flat-panel detector, e.g. a flat-panel digital image detector, such as a flat-panel digital X-ray image detector.

The stationary image detector 3 may be operably connected to the tomographic reconstruction unit and may transmit a signal to the tomographic reconstruction unit, where this signal is representative of a spatial distribution of the radiation impinging on the detector. This signal may for example be an electrical signal, an optical signal or a radiofrequency electromagnetic transmission. The signal may for example comprise a digital representation of a plurality of pixel responses to the radiation.

The tomographic imaging device 1 further comprises a transport line 5 for moving the product item 4 along a predetermined path in between the radiation source 2 and the image detector 3. For example, the transport line 5 may be adapted for moving a stream of product items 4 along the predetermined path, e.g. for moving each product item 4 in the stream along the path.

The product item 4 is thus moved along a path in between the detector 3 and the radiation source 2, e.g. through a field of view observed by the detector 3, e.g. a digital X-ray detector, with respect to a radiation field, e.g. an X-ray beam, emitted by the radiation source 2, e.g. a diverging beam of X-rays emitted from a substantially point-like focal point of an X-ray tube and substantially directed toward a digital X-ray image detector.

This transport line 5 may for example comprise a conveyor belt, e.g. a moving conveyor belt on which the product item is supported while being moved along the trajectory or an overhead conveyor from which the product item is hanging while being moved along the trajectory. The transport line 5 is adapted for simultaneously rotating and translating the product item 4. Thus, the product item is oriented in a different orientation with respect to the image detector 3 when each of the plurality of projection images is captured. And, simultaneously, the product item is positioned at a different position along the transport line 5, e.g. along the predetermined path, when each of the plurality of projection images is captured. Such different orientations are orientations resulting in substantially different 2D radiographies. In other words, such radiographies should contain different information for the object.

In operation, the product item 4, e.g. the object 4 to be inspected, may travel along a trajectory formed by the predetermined path, in the volume of space between the stationary source 2 and the stationary image detector 3, e.g. in such a way that images acquired by the stationary image detector 3 can be used by the tomographic reconstruction unit 6 to provide a sufficiently accurate computed tomography (CT) reconstruction, e.g. sufficiently accurate in view of product inspection requirements imposed by a specific application.

In embodiments according to the present invention, the transport line 5 may comprise a curved conveyor belt, adapted for simultaneously translating and rotating the object 4, for example as shown in FIG 1. For example, the conveyor belt may comprise two side-belts moving at slightly different speeds to exert a rotational force on the object 4 while moving along the conveyor, e.g. the side-belts contact the object at two different sides thereof and cause a rotation due to the difference in speeds of these belts. The conveyor belt may comprise a central belt to move the object 4 along, and a frictional rim for exerting a different friction force on one side of the object relative to the other side, such that the deceleration due to the higher friction on one side causes a rotation of the object while moving along.

However, in embodiments of the present invention, the transport line 5 may be adapted for translating the object 4 along a substantially rectilinear path, e.g. along a rectilinear path. The transport line 5 may furthermore be provided with a rotation stage for rotating the object 4, e.g. at a constant angular velocity although not limited thereto, while being translated by the transport line 5.

For example, a plurality of rotation stages may be fixed to the transport line such as to move along the substantially rectilinear path when in operation. Each rotation stage may receive an object 4 to be analysed, e.g. from a loading terminal. Each rotation stage may then rotate the corresponding object 4, e.g. at a constant angular velocity, while moving along the substantially rectilinear path. Finally, each rotation stage may release the object 4 it is supporting at an unloading terminal.

The rotation stage may for example comprise a support for supporting the object 4, or a grappler for holding the object 4. The rotation stage may also comprise a motor or actuator for automated rotation of the object 4.

In such rectilinear configuration, a radiation source point S of the radiation source 2, e.g. an X-ray source point, may be located at a predetermined distance SDD from a detector plane of the image detector 3, e.g. a detector plane of a flat-panel digital X-ray image detector, as illustrated in FIG 2. Here, the fixed distance SDD may refer to a distance from the point S to the detector plane along a line that runs through the point S and that is orthogonal to the detector plane, e.g. the line SC depicted in FIG 2. The orthogonal projection of the source point S with respect to the detector plane may for example coincide with a central point C on the detector. A central detector row of the flat-panel digital X-ray image detector may be oriented parallel to a direction of translation of the object 4. This direction of translation AB may for example correspond a substantially rectilinear path due to the product item 4 being conveyed by a straight conveyor belt. For example, a line AB may intersect the line SC, which connects the source point S and the central detector point C, in a point O. This line AB may be directed parallel to a central detector row of the image detector 3 and may define a direction in which the object translates from A to B. A conveyor belt for translating the object 4 may for example be arranged such that the substantially rectilinear path along which the object 4 travels is oriented substantially parallel to a detection plane of the image detector 3.

The product item 4 may cover an equal distance from A to O and from O to B, e.g. $\|AO\| = \|OB\|$, while keeping a constant distance ODD between the object 4 and the surface of the detector 3. This distance ODD may be defined in each point along the trajectory of the object as the distance from a central point of the object, e.g. the geometrical centre of the object's convex enclosure, to the orthogonal projection of this central point onto the surface of the detector.

In embodiments according to the present invention, the object 4 may rotate during its translation with a constant angular velocity around a rotation axis fixed in or near the centre of the object and parallel to the detector plane. The angle $\delta$ between the translation path AB of the object and the rotation axis may have a predetermined value that remains constant during the translation.

For example, if $\delta$ is substantially equal to 0°, e.g. has an absolute value less than 5°, e.g. less than 2° or even less than 1°, for example if the axis of rotation is substantially aligned with the direction of translation, e.g. $\delta=0$°, a helical scan may be obtained. Thus, an axis of rotation of the rotation stage may be substantially parallel to the substantially rectilinear path along which the object is translated. It is an advantage of such helical scan that it may be particularly simple to process the plurality of projection images in order to obtain a tomographic reconstruction, as helical reconstruction algorithms are well-known in the art.

If $\delta$ is substantially equal to 90°, e.g. has an absolute value in the range of 85° to 95°, e.g. in the range of 88° to 92°, or in the range of 89° to 91°, for example if the axis of rotation is substantially perpendicular to the direction of translation, e.g. $\delta=90$°, an advantageous arrangement on a straight conveyor belt can be achieved. It is an advantage of such embodiments that the object 4 can be supported on a horizontal support element that is rotated, thus allowing the object to maintain its position and orientation with respect to this rotating and translating support element by gravity and contact forces. For example, the axis of rotation of the rotation stage may be substantially perpendicular to the substantially rectilinear path along which the product item 4 is translated, and this axis of rotation may form an angle with the gravitational vertical direction in the range of 0° to 20°, e.g. in the range of 0° to 10°, or even in the range of 0° to 5°, for example 2° or less.

The product item 4, e.g. a sample to be inspected, may perform a translation, e.g. from the left to the right as shown on FIG 2, for example parallel to the central row of the detector 3 and in the plane containing both this central detector row and the source point. While traversing the field of view FOV, the product item 4 may also perform a rotational movement that supplements the inherent change in the viewing angle related to the translational movement.

Preferably, every point in the object 4 is intersected, over the course of the travelled trajectory, by a plurality of source rays distributed over an angular range of at least 170°, e.g. preferably of at least 180°, for example 180° or 190°, or even higher in order to improve image quality, e.g. up to a full 360° rotation. Thus, relative to any point of interest, e.g. any and each 3D point, in the product item 4, the source may trace out a trajectory in space which does not intersect this point of interest and for which the end points are collinear with this given point. An object trajectory substantially satisfying the Tuy-Smith condition may be considered 'complete'. For example, for a conventional circular cone beam scan, this would result in a rotation over 180°+2$\gamma$, where $\gamma$ is half the source opening angle covering the entire object 4.

For a straight conveyor belt geometry, as illustrated in FIG 2, the rotation angle forming a complete trajectory can be found by considering the object at its central position O between the source 2 and the detector 3, e.g. halfway its translation path, where the central ray 7 cuts the region of interest (ROI) into two symmetric halves. It is to be noted that, in this exemplary geometry, conclusions regarding the covered angular range for a point in one half of the ROI w.r.t. its movement on one side of the source is equivalent in the symmetric case for a point in the other half of the region of interest w.r.t. its movement on the other side of the source. Furthermore, the points on the intersection between the outer rim of the ROI and the central ray, indicated by P and Q on FIG 2, cover the smallest angular range of all points within the ROI. If these points are to be observed over at least 180 degrees by the detector, two conditions connect the geometrical parameters of the field of view (FOV), the detector run-out (W), the Object Detector Distance (ODD) and the ROI diameter ($D_{ROI}$), to the a priori unknown parameters of source-object distance (SOD), source-detector distance (SDD) and the rotation angle ($\theta$).

In order to comply with the Tuy-Smith condition, a rotation angle $\theta$ may be determined for the straight conveyor belt trajectory, such that a complete sampling is obtained and an exact reconstruction may be carried out. If the field of view FOV, the object to detector distance ODD, the region-of-interest diameter $D_{ROI}$ and the detector run-out W are predetermined by the geometry of the system, two conditions may arise on SOD, SDD and the rotation angle $\theta$.

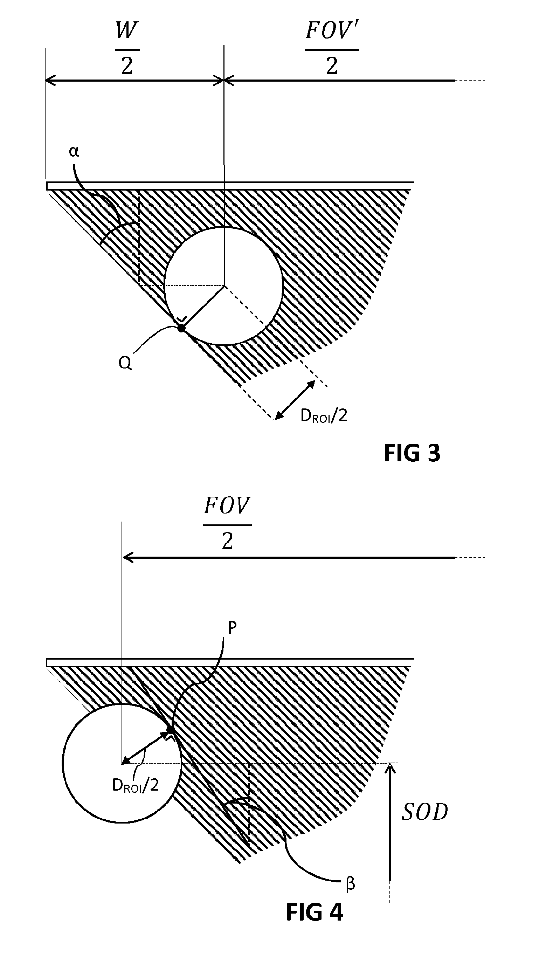

While moving backward from its central position, the point Q will be the first point to be projected out of the detector field. At this outer position the source rays should have covered at least 90 degrees around point Q. This condition occurs when the ROI is tangent to the outer ray in Q as depicted in FIG 3, and connects the half opening angle ($\alpha$) to W, $D_s$ and the ODD :

$$D_{ROI}\sqrt{1 + tan^2(\alpha)} = W - 2\, ODD \tan(\alpha)$$

The opening angle is given by:

$$\tan(\alpha) = \frac{FOV' + W}{2\, SDD}$$

with *FOV'*/2 the distance travelled by the ROI centre starting from its central position up until the position where the condition presented hereinabove is met.

To complete the trajectory for point P, there may be a source ray tangent to the ROI in P, as illustrated in FIG 4. With $\beta$ being the angle between this ray and the central source ray, the following condition holds:

$$\tan(\beta) = \frac{FOV \sin(\beta)}{D_{ROI} + 2\, SOD \sin(\beta)}$$

FOV and FOV' are connected through :

$$FOV = FOV' \frac{\pi/2 - \beta}{\pi/2 - \alpha} = FOV' \frac{\theta}{\pi/2 - \alpha}$$

and *SDD = SOD + ODD.*

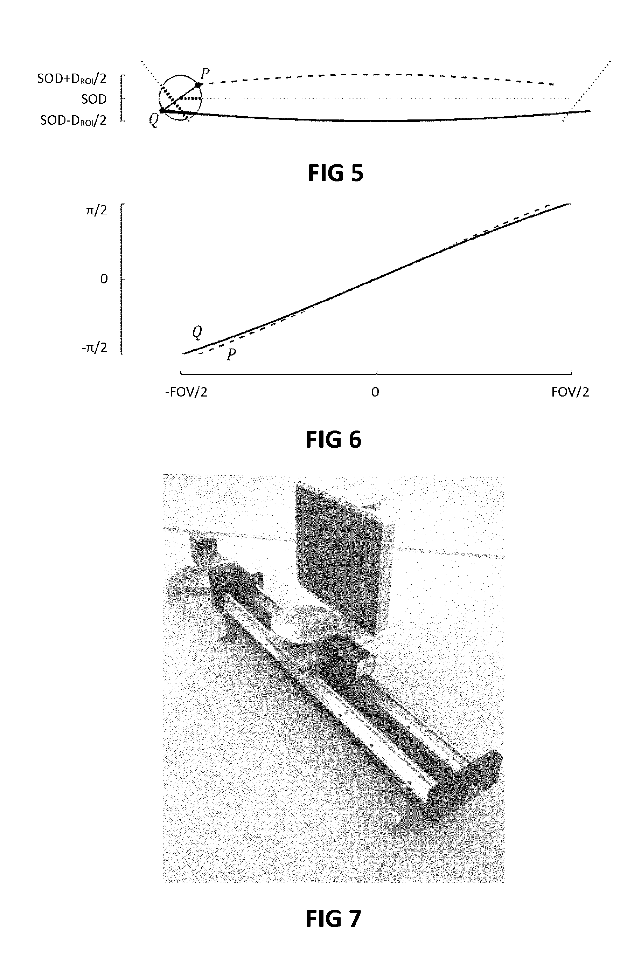

The equations presented hereinabove allow the calculation of SDD, SOD and θ, given FOV, W, ODD and $D_{ROI}$, thus defining a straight conveyor belt geometry with rotation stages in accordance with embodiments of the present invention. In FIG 5, the trajectories for the points P and Q are plotted for a situation in which all of the geometrical parameters comply with the equations and conditions as described hereinabove. FIG 6 illustrates that these points do indeed cover an angular range of at least π radians.

For example, ODD and $D_{ROI}$ may be known a priori, for example may be predetermined, e.g. preselected within the constraints that:

$$D_{ROI} \geq D_s$$

$$ODD \geq \frac{D_s}{2}$$

with $D_s$ the diameter of the object 4. Thus, the object is contained within the ROI, without hitting the detector plane. FOV and W can also be selected, e.g. as dictated by a certain demand in throughput and/or technical limitations such as the detector size. Moreover, a fixed nature of either one can be interchanged for a specific choice in SDD or SOD.

The effective throughput $T_{eff}$, e.g. the number of objects which can be scanned per second, may be given by :

$$T_{eff} = \frac{N_s}{N_P\, t_{exp}} \left[ \frac{samples}{sec} \right]$$

where Np refers to the number of projections acquired during the scan, each acquired projection having an exposure time of $t_{exp}$ seconds. The number $N_s$ of objects that can be scanned simultaneously is limited by the overlap of the projection at the start of two subsequent acquisitions and is given by :

$$N_s = \frac{FOV}{D_{ROI}} \cos(\beta)$$

The trajectory described above can be exchanged for any relative motion of the scanned object w.r.t. a stationary detector-source pair in such a way that the Tuy-Smith condition will be satisfied, e.g. by combining an object rotation and a translation along a bent conveyor belt or by translating the object from the source towards the detector (or vice versa) during its rotation. In other words, the translational movement does not have to be a straight line and does not need to be parallel to the detector plane in accordance with embodiments of the present invention.

The rotation used in the above reasoning may be a counter clockwise rotation.

While the exemplary trajectory described hereinabove may be complete for points in a slice of the object which is imaged by the central detector row, points in other slices may be mildly affected by cone beam artefacts. While such artefacts may still allow an accurate product testing, such artefacts may also be reduced by inclining or declining the conveyor belt to produce a simultaneous vertical and horizontal movement while keeping the rotational axis in the vertical direction, e.g. by choosing δ < 90°.

Nevertheless, even if a complete angular sampling is only achieved for the points in the central plane of the object, an approximate, non-exact reconstruction for off-centre points may be sufficient for various applications. The simplicity of a conveyor belt geometry in accordance with embodiments of the present invention is advantageously well-suited for applications in in-line product inspection. This simplicity may offer an advantage of a helical scanning geometry, even though such helical scanning geometry may readily offer a complete angular sampling of the entire object, e.g. would not suffer from off-centre artefacts as described hereinabove.

Embodiments of the present invention may use a large digital X-ray flat panel detector. Even though the cost of such detector may increase substantially proportionally to the detector area, the image magnification factor may be kept smaller for larger detector areas, such that the detector can be cropped in a direction orthogonal to the principal direction of translation of the transport line, e.g. cropped in the vertical direction for a horizontally arranged transport line, to fit the objects projection.

Whereas in embodiments above reference is made to a conveyor belt, the transportation line also may alternatively comprise a free fall portion whereby the product items are measured while being in free fall. The product items are given a twist so that they undergo a rotation during their free fall. Such a rotation may e.g. be caused by letting the product items roll from a surface. Alternatively the rotation can be induced by fluid jets, such as for example by using air jets, gas jets, water jets, ....

In another set of embodiments, the transportation line may comprise a liquid stream wherein the product items are floating. Rotation in these embodiments can be induced by fluid jets, etc.

In some embodiments, the transportation line may comprise a conveyor belt or chain with speed controller rotating rollers. In some other embodiments, the transportation line may comprise a conveyor belt or chain with rotation controlled cups. As indicated above, in some embodiments, the transportation line may also comprise a conveyor belt or chain with one or more speed controlled rotation stages. It will be understood that other types of transportation lines also may be used and are not limited to the particular examples given.

In a second aspect, the present invention also relates to a tomographic imaging method for in-line product inspection. The tomographic imaging method comprises moving a product item 4 along a predetermined path in between a stationary radiation source 2 and a stationary image detector 3, for example using a transport line 5 in a device according to embodiments of the first aspect of the present invention. The tomographic imaging method further comprises capturing a plurality of projection images of the product item 4 using the stationary image detector 3 by detecting radiation emitted by the stationary radiation source 2 and transmitted through the product item 4. For example, the radiation may comprise ionizing radiation, e.g. X-ray photons. The method further comprises determining an internal representation of the product item 4 based on the plurality of projection images.

The step of moving of the product item 4 comprises simultaneously rotating and translating the product item 4 such as to orient and position the product item in a different orientation and at a different position with respect to the image detector 3 when each of the plurality of projection images is captured.

For example, the method may comprise emitting the radiation, e.g. by the stationary radiation source, in a predetermined cone angle around a central beam axis direction 7 directed to a central radiation-sensitive pixel element of the image detector. For example, the stationary image detector 3 may be flat-panel digital X-ray image detector having such central radiation sensitive pixel element.

The product item may be moved as part of a stream of product items thus moved along in accordance with embodiments of the present invention.

The product item may be moved by conveying the item along a curved trajectory, thereby simultaneously translating and rotating the product item 4.

Moving the product item may comprise translating the product item 4 along a substantially rectilinear path, while simultaneously rotating the product item 4, e.g. around an internal axis with respect to the object 4. The product item may be moved along a substantially rectilinear path that is oriented substantially parallel to a detection plane of the image detector. The product item may be rotated at a constant angular velocity. The axis of rotation around which the product item is rotated may be substantially parallel to the substantially rectilinear path.

The axis of rotation may in accordance with embodiments of the present invention may be substantially perpendicular to the substantially rectilinear path, and the axis of rotation may form an angle with the gravitational vertical direction of less than 20°, e.g. less than 10° or less than 5°, e.g. 2° or even less.

Further details of a method in accordance with embodiments of the present invention shall be clear from embodiments of the first aspect of the present invention described hereinabove.

In a further aspect, the present invention also relates to the use of a tomographic imaging device according to embodiments of the first aspect of the present invention for the in-line inspection of food articles and/or the in-line detection of defects in food articles.

Following example describes an optimisation and simulation relating to embodiments of the present invention. This example is only provided for informative purposes, e.g. in order to assist the skilled person in reducing the invention to practice, and should not be construed as limiting the scope of the present invention in any way.

In this example, a straight conveyor belt trajectory as described hereinabove in relation to FIG 2, is studied by means of simulations of the setup and a corresponding acquisition protocol. A digital phantom is used, serving as a ground truth. This allows for the extraction of a quality measure by comparing simulated reconstructions of the scanned object to this ground truth. Thus, it is shown how a setup design in accordance with embodiments of the present invention can be optimized towards certain demands on quality and conveyor belt throughput.

The effect of the acquisition speed on defect detectability is investigated by simulating a conveyor belt setup where an object passes in between an X-ray source on one side and a large field of view panel detector on the other side, while completing a partial rotation. This rotation enables a complete angular sampling of each point in the volume of the imaged object, according to the Tuy-Smith condition, insofar cone beam sampling artefacts may be neglected. The phantom used in this simulation was based on a high resolution CT reconstruction of a Breaburn apple, showing browning disorders of different sizes and contrast.

| Material # | $\rho$ [g/cm$^3$] | $\mu$[1/cm] |
|---|---|---|
| 1 | 0.001205 | 0.018 |
| 2 | 0.51 | 0.053 |
| 3 | 0.58 | 0.087 |
| 4 | 0.64 | 0.123 |
| 5 | 0.70 | 0.158 |
| 6 | 0.77 | 0.193 |
| 7 | 0.89 | 0.263 |
| 8 | 0.83 | 0.228 |
| 9 | 0.96 | 0.298 |
| 10 | 1.02 | 0.333 |

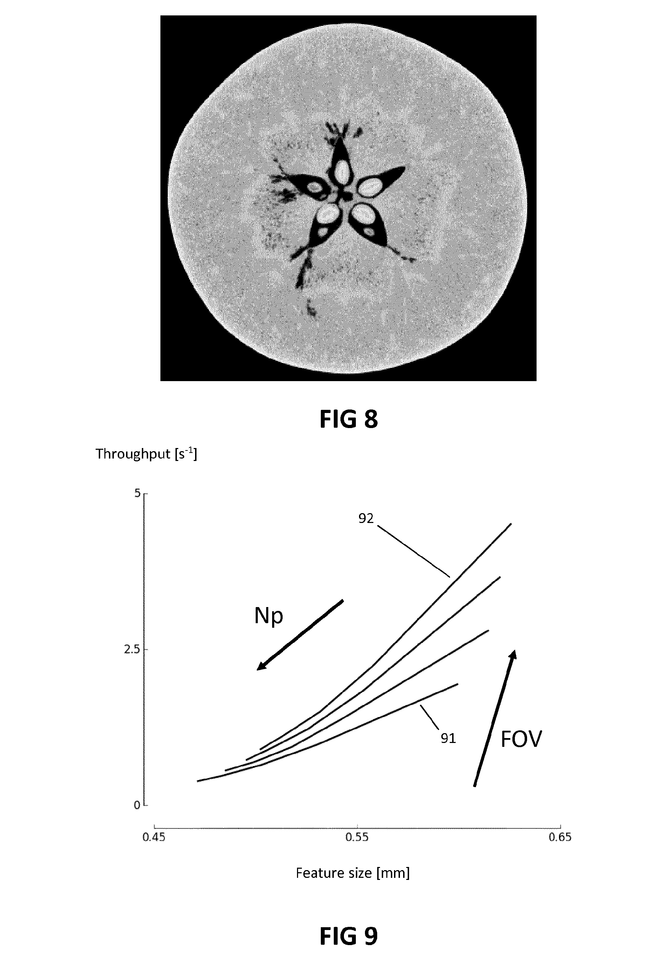

FIG 8 shows a single slice through this digital food phantom. The high resolution scan was binned into 10 grey values, representative of 10 different materials corresponding to soft organic tissue with varying densities. Densities and attenuation coefficients for the 10 materials of this phantom are tabulated in the table here above. The simulations were performed with a realistic, polychromatic X-ray projection simulator, which accurately models the Poisson noise behavior. In this example, twenty conveyor belt scans were simulated with a varying number of projections and different detector lengths. These parameters have an effect on the throughput, since more samples can be scanned simultaneously with a larger detector and at a faster rate when fewer projections are acquired. It is for example to be noted that an increase in field of view may entail a higher throughput, yet at the price of an increased cost. On the other hand, when the number of projections per integration time increases, the throughput is reduced, but a higher quality can be achieved.

The simulated scans are reconstructed into a 3D volume, using an algebraic reconstruction technique (SART), and compared to the ground truth phantom volume through correlation in the Fourier domain, i.e. Fourier shell correlation. The correlation between both volumes drops below a minimal SNR threshold at a certain spatial frequency, which serves as a similarity metric, and is inversely proportional to the minimally detectable defect sizes. These minimally detectable feature sizes can be plotted as a function of throughput. Based on such plots, design specifications for the dimensions of an imaging setup in accordance with embodiments of the present invention and the number of projections to be acquired can be formulated.

For example, a plurality of plots of throughput, in samples per second, versus detectable feature size, in mm per line pair, are shown in FIG 9. The plots correspond to field of views of 40 cm, 60 cm, 80 cm and 100 cm, in that order from the lowest plot 91 to the steepest plot 92. For each FOV, the corresponding plot is formed by different selections of the number of projections, such that a lower feature size can be detected when generally increasing Np.

Furthermore, a hardware prototype was constructed for illustrating aspects of embodiments of the present invention, e.g. to emulate a straight conveyor belt acquisition trajectory. This prototype comprises a tray containing a rotary motor and a detector, which are actuated by a spindle to perform a horizontal translation. A trajectory for the object to be studied is realised by simultaneously actuating the rotary and the translational motor. While embodiments of the present invention relate to a stationary detector arrangement, a prototype as described allows the study of properties of a system in accordance with embodiments of the invention using a small and relatively cheap detector, e.g. by emulating a large detector span by translating the detector along with the scanned object. A photograph of this prototype is shown in FIG 7.

In one aspect, the present invention also relates to a controller for controlling a tomographic imaging system, the controller being adapted for controlling capturing of a plurality of projection images, taking into account the simultaneously rotating and translating of the product item. Such a controller may be implemented in software as well as in hardware.

In one aspect, the present invention also relates to a computer program product for performing, when executed on a computer, a method for tomographic imaging method for in-line product inspection, the tomographic imaging method comprising capturing a plurality of projection images of the product item using the stationary image detector by detecting radiation emitted by the stationary radiation source and transmitted through said product item when the product item is simultaneously rotating and translating, and determining an internal representation of the product item based on the plurality of projection images taking into account the simultaneous rotation and translation movement of the product item during the capturing.

**Claims**

1.  A tomographic imaging device (1) for in-line product inspection, the tomographic imaging device (1) comprising :

    - a stationary radiation source (2) for emitting radiation,
    - a stationary image detector (3) for capturing a plurality of projection images of a product item (4) by detecting said radiation when transmitted through said product item (4),
    - a transport line (5) for moving said product item (4) along a predetermined path in between said radiation source (2) and said image detector (3), and
    - a tomographic reconstruction unit (6) for determining an internal representation of the product item (4) based on the plurality of projection images,
    wherein said transport line (5) is adapted for simultaneously rotating and translating along the transport line said product item (4) such as to orient and position the product item in a different orientation and at a different position with respect to the image detector (3) when each of the plurality of projection images is captured, said rotating occurring around a rotation axis that is not parallel with the translation axis of said translating.

2.  The tomographic imaging device (1) according to claim 1, wherein the stationary source (2) is adapted for emitting said radiation in a predetermined cone angle around a central beam axis direction (7), said central beam axis direction (7) being directed to a central radiation-sensitive pixel element of the image detector.

3.  The tomographic imaging device (1) according to claim 1 or claim 2, in which the stationary source (2) is an ionizing radiation source for emitting ionizing radiation.

4.  The tomographic imaging device (1) according to any of the previous claims, wherein the predetermined cone angle ($\alpha$) of the emission beam may relate to the minimum rotation angle ($\theta$) and the diameter ($D_{ROI}$) of the product item during its transition through the field of view of the emission beam at a predetermined distance (ODD) from an image detector of a predetermined width (L) as follows :

$$SDD = \frac{L}{2\tan(\alpha)}$$

$$SOD = SDD - ODD$$

$$\frac{\pi/2 - \alpha}{\theta} = \frac{\sin(\theta)}{\cos(\alpha)} \cdot \frac{2\,SOD\,\sin(\alpha) - D_{ROI}}{2\,SOD\,\cos(\theta) + D_{ROI}}$$

5.  The tomographic imaging device (1) according to claim 3 or claim 4, in which the stationary image detector (3) comprises a flat-panel digital X-ray image detector.

6.  The tomographic imaging device (1) according to any of the previous claims, in which the transport line (5) is adapted for moving a stream of product items comprising said product item (4) along said predetermined path.

7.  The tomographic imaging device (1) according to any of the previous claims, in which the transport line (5) comprises any of a conveyor belt, a fluid stream portion or a free fall portion, said stationary source and image detector being positioned around said conveyor belt, fluid stream portion or free fall portion.

8.  The tomographic imaging device (1) according to claim 7, in which said conveyor belt comprises a curved conveyor belt adapted for simultaneously translating and rotating said product item (4).

9.  The tomographic imaging device (1) according to claim 7, in which said conveyor belt is adapted for translating the product item (4) along a substantially rectilinear path, the transport line (5) further comprising a rotation stage for rotating the product item (4) while being translated along the substantially rectilinear path.

10. The tomographic imaging device (1) according to claim 9, in which said conveyor belt is arranged such as to orient the substantially rectilinear path substantially parallel to a detection plane of the image detector.

11. The tomographic imaging device (1) according to claim 9 or claim 10, in which said rotation stage is adapted for rotating the product item (4) at a constant angular velocity.

12. The tomographic imaging device (1) according to any of claims 9 to 11, in which an axis of rotation of said rotation stage is substantially parallel to said substantially rectilinear path.

13. The tomographic imaging device (1) according to any of claims 9 to 11, in which an axis of rotation of said rotation stage is substantially perpendicular to the substantially rectilinear path, and said axis of rotation forms an angle with the gravitational vertical direction of less than 20°.

14. A tomographic imaging method for in-line product inspection, the tomographic imaging method comprising:

- moving a product item (4) along a predetermined path in between a stationary radiation source (2) and a stationary image detector (3),
- capturing a plurality of projection images of the product item (4) using the stationary image detector (3) by detecting radiation emitted by the stationary radiation source (2) and transmitted through said product item (4), and
- determining an internal representation of the product item (4) based on the plurality of projection images, wherein said moving of the product item (4) comprises simultaneously rotating and translating said product item (4) such as to orient and position the product item in a different orientation and at a different position with respect to the image detector (3) when each of the plurality of projection images is captured, said rotating occurring around a rotation axis that is not parallel with the translation axis of said translating.

15. The use of a tomographic imaging device according to any of claims 1 to 13 for the in-line inspection of defects in food articles.

**FIG 1**

**FIG 2**

$$\frac{W}{2} \qquad \frac{FOV'}{2}$$

α

Q

$D_{ROI}/2$

**FIG 3**

$$\frac{FOV}{2}$$

P

$D_{ROI}/2$

$SOD$

β

**FIG 4**

**FIG 5**

**FIG 6**

**FIG 7**

**FIG 8**

Throughput [s$^{-1}$]

Feature size [mm]

**FIG 9**

Europäisches
Patentamt

European
Patent Office

Office européen
des brevets

**EUROPEAN SEARCH REPORT**

Application Number

EP 15 17 3032

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 989 225 A (GUPTA NAND K [US] ET AL) 29 January 1991 (1991-01-29) * column 1, line 15 - line 66 * * column 5, line 39 - column 6, line 42; figures 1-3 * | 1,3,6, 9-14 | INV. G01N23/04 |
| X | DE 10 2013 210192 A1 (FRAUNHOFER GES ZUR FÖRDERUNG DER ANGEWANDTEN FORSCHUNG E V [DE]) 2 October 2014 (2014-10-02) * paragraph [0002] - paragraph [0008] * * paragraph [0033] - paragraphs [0036], [0042], [0046], [0057], [0058]; figure 1 * | 1-7,14 | |
| X | EP 2 381 247 A1 (MICROTEC SRL [IT]) 26 October 2011 (2011-10-26) * paragraphs [0022], [0025], [0028], [0029], [0049], [0064]; figures 1-4, 15 * | 1-7,14 | |
| X | US 5 648 996 A (GUPTA NAND K [US]) 15 July 1997 (1997-07-15) * column 4, line 2 - line 41 * * column 5, line 12 - column 6, line 67; figures 1-6 * | 1,3,6,7, 9-14 | TECHNICAL FIELDS SEARCHED (IPC) G01N |
| X | DE 10 2005 062065 A1 (FRAUNHOFER GES FORSCHUNG [DE]) 12 July 2007 (2007-07-12) * paragraph [0007] - paragraph [0010] * * paragraph [0030] - paragraphs [0035], [0044]; figures 1-3 * | 1,3,5-7, 14 | |

~~The present search report has been drawn up for all claims~~

| Place of search | Date of completion of the search | Examiner |
|---|---|---|
| The Hague | 2 December 2015 | Pagels, Marcel |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

......................................................................

& : member of the same patent family, corresponding
   document

EPO FORM 1503 03.82 (P04C01)

Europäisches
Patentamt

European
Patent Office

Office européen
des brevets

Application Number

EP 15 17 3032

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-6, 9-14(completely); 7(partially)

☐ The present supplementary European search report has been drawn up for those parts of the European patent application which relate to the invention first mentioned in the claims (Rule 164 (1) EPC).

Europäisches Patentamt

European Patent Office

Office européen des brevets

**LACK OF UNITY OF INVENTION
SHEET B**

The Search Division considers that the present European patent application does not comply with the requirements of unity of invention and relates to several inventions or groups of inventions, namely:

```
    1. claims: 1-6, 9-14(completely); 7(partially)

        Cone angle X-ray source

    1.1. claim: 3

        Ionizing radiation

    1.2. claim: 5

        Flat panel X-ray detector

    1.3. claim: 6

        Product stream

    1.4. claim: 7(partially)

        Conveyer belt

    1.5. claims: 9-13

        Rotation stage
                        ---

    2-4. claims: 8(completely); 7(partially)

        Conveying means
                        ---

    5. claim: 15

        Food inspection
                        ---

Please note that all inventions mentioned under item 1, although not
necessarily linked by a common inventive concept, could be searched
without effort justifying an additional fee.
```

## ANNEX TO THE EUROPEAN SEARCH REPORT
## ON EUROPEAN PATENT APPLICATION NO.

EP 15 17 3032

This annex lists the patent family members relating to the patent documents cited in  the above-mentioned European search report.
The members are as contained in the European Patent Office EDP file on
The European Patent Office is in no way liable for these particulars which are merely given for the purpose of information.

02-12-2015

| Patent document cited in search report | | Publication date | Patent family member(s) | | Publication date |
|---|---|---|---|---|---|
| US 4989225 | A | 29-01-1991 | NONE | | |
| DE 102013210192 | A1 | 02-10-2014 | DE 102013210192 A1<br>EP 2981812 A1<br>WO 2014161903 A1 | | 02-10-2014<br>10-02-2016<br>09-10-2014 |
| EP 2381247 | A1 | 26-10-2011 | CA 2738050 A1<br>EP 2381247 A1<br>US 2011274239 A1 | | 20-10-2011<br>26-10-2011<br>10-11-2011 |
| US 5648996 | A | 15-07-1997 | NONE | | |
| DE 102005062065 | A1 | 12-07-2007 | DE 102005062065 A1<br>WO 2007076817 A1 | | 12-07-2007<br>12-07-2007 |

EPO FORM P0459

For more details about this annex : see Official Journal of the European Patent Office, No. 12/82